# EUROPÄISCHE PATENTSCHRIFT

(11) **EP 1 284 415 B1**
(45) Veröffentlichungstag und Bekanntmachung des Hinweises auf die Patenterteilung: **22.11.2006**
(21) Anmeldenummer: 02405613.7
(22) Anmeldetag: 17.07.2002
(51) Int. Cl.: G01N 11/14, H02K 7/09, A61M 1/10

(54) **Vorrichtung und Verfahren zur Bestimmung der Viskosität eines Fluids**
Method and device for determining the viscosity of a fluid
Dispositif et méthode de détermination de la viscosité d'un fluide

(30) Priorität: 16.08.2001 EP 01810790; 04.12.2001 EP 01811173
(43) Veröffentlichungstag der Anmeldung: 19.02.2003
(73) Patentinhaber: Levitronix LLC, Waltham, MA 02451 (US)
(72) Erfinder: Schöb, Reto, Dr., 8964 Rudolfstetten (CH); Huwyler, Simon, 6315 Oberägeri (CH)
(74) Vertreter: Sulzer Management AG

(56) Entgegenhaltungen:
- EP-A- 0 967 475
- US-A- 4 643 021
- US-A- 5 798 454
- US-A- 6 100 618

## Beschreibung

Die Erfindung betrifft eine Vorrichtung und ein Verfahren zur Bestimmung der Viskosität eines Fluids gemäss dem Oberbegriff des unabhängigen Anspruchs der jeweiligen Kategorie.

Das Newtonsche Reibungsgesetz beschreibt für den einfachen Fall einer laminaren Strömung die Stärke der inneren Reibung zwischen benachbarten Schichten in einem strömenden Fluid, wie zum Beispiel in einer strömenden Flüssigkeit oder einem Gas. Die innere Reibungskraft F_{R}, die auf eine solche Schicht im strömenden Fluid wirkt, ist proportional zu deren Fläche A und einem Geschwindigkeitsgradienten dv/dx (v: Geschwindigkeit des strömenden Fluids am Ort x) zu einer benachbarten Schicht gleicher Fläche. Im Fall einer laminaren Strömung gilt der wohlbekannte einfache Zusammenhang F_{R} = η·A·dv/dx, wobei die dynamische Viskosität η als ein Mass für die Zähigkeit des Fluids anzusehen ist. Neben der korrekten SI-Einheit Pa.s für die dynamische Viskosität η ist die Einheit 1 Poise = 0.1 Pa·s weiterhin durchaus geläufig. Neben der dynamischen Viskosität η stellt die auf die Dichte des Fluids normierte, sogenannte kinematische Viskosität ν = η/ρ (ρ: Dichte des Fluids), eine wichtige Kenngrösse eines Fluids dar. Im Rahmen dieser Anmeldung ist dem üblichen Sprachgebrauch folgend unter "Viskosität" immer die "dynamische Viskosität η" zu verstehen.

Wie die obigen Ausführungen zeigen, kann die Viskosität prinzipiell durch Messung der inneren Reibung F_{R} des Fluids bestimmt werden. Hierzu wird ein Probekörper bekannter Geometrie in einem ruhenden oder strömenden Fluid bewegt, wobei aufgrund der inneren Reibung F_{R} im Fluid ein messbarer Anteil der Antriebsleistung des Probekörpers als Verlustleistung in Wärme umgewandelt wird. Aus der gemessenen Verlustleistung kann, eventuell unter Berücksichtigung weiterer Parameter, wie Geometriefaktoren oder weiterer Eichparameter, letztlich die Viskosität η und / oder die kinematische Viskosität ν bestimmt werden.

In der Praxis wird ein Probekörper bekannter Geometrie in einem ruhenden oder strömenden Fluid mittels eines elektrischen Antriebs rotiert und aus der gemessenen elektrischen Verlustleistung des Antriebs die Viskosität η bestimmt. Die spezielle Form des Probekörpers kann z.B. durch Eichmessungen an Fluiden wohlbekannter Viskosität berücksichtigt werden. Darüber hinaus ist zu beachten, dass die Viskosität auch von physikalischen Zustandsgrössen, wie z.B. von der Temperatur oder dem Druck des Fluids abhängt und im allgemeinen als eine Funktion weiterer physikalischer Kenngrössen, wie beispielsweise der Dichte, zu betrachten ist.

Viskosimeter, die unter Berücksichtigung vorgenannter Randbedingungen und nach dem zuvor skizzierten oder nach verwandten Prinzipien arbeiten, sind seit langem in vielen verschiedenen Ausführungsvarianten bekannt. Um aus der vom Drehantrieb des Viskosimeters aufgenommenen elektrischen Leistung die Viskosität des Fluids bestimmen zu können, muss möglichst genau derjenige Anteil an der gesamten Verlustleistung bekannt sein, der allein auf die innere Reibung in der Flüssigkeit zurückzuführen ist. Das heisst insbesondere, dass alle Reibungsverluste, die z.B. in Lagern des Drehantriebs selbst oder an Dichtungen von Durchführungen von Antriebsgestängen usw. auftreten, genauestens bekannt sein müssen. Gerade diese Parameter sind allerdings bei herkömmlichen elektrischen Antriebssystemen für Viskosimeter in der Regel nur unzureichend bekannt. Darüber hinaus können die zuvor erwähnten, nicht erwünschten, zusätzlichen Reibungsverluste von den aktuellen Betriebsparametern unter denen das Viskosimeter betrieben werden muss, wie z.B. der Temperatur oder der Dichte des zu untersuchenden Fluids und sogar von der zu untersuchenden Viskosität selbst (nieder- oder hochviskos, Gas oder Flüssigkeit), abhängen. Daher ist die Messgenauigkeit bekannter Viskosimeter häufig unbefriedigend, oder es muss ein erheblicher zusätzlicher Aufwand zur Kalibrierung der Messanordnung betrieben werden. Wobei bei einer Änderung der Betriebsparameter und / oder Umstellung der Messung auf ein Fluid mit anderen physikalischen Kenngrössen die Kalibrierung jeweils wieder neu vorgenommen werden muss. Dieser Umstand erschwert oder verhindert insbesondere dann eine präzise Bestimmung der Viskosität, wenn diese sich im Verlauf der Messung verändert, d.h. wenn die Viskosität eines Prozesses "In-Line" bestimmt werden soll. So kann mit den bekannten Viskosimetern beispielsweise der zeitliche Verlauf langsamer chemischer Reaktionen (im flüssigen oder gasförmigen Milieu) in einem Reaktionsgefäss sehr häufig nur mit ungenügender Genauigkeit durch eine zeitabhängige Messung der Viskosität beobachtet werden. Die Viskosität kann auch innerhalb eines inhomogenen Fluids stark vom Ort abhängen. So könnte z.B. die Durchmischung des Fluids in einem Reaktionsbehälter im Prinzip über die Viskosität kontrolliert werden, was jedoch mit den bekannten Viskosimetern nur mit grossem Aufwand und /oder der Tolerierung von massiven Messfehlern möglich ist.

Besondere Probleme können auftreten, wenn die Viskosität chemisch oder physikalisch aggressiver Fluide bestimmt werden soll. So kann es bei speziellen Flüsssigkeiten, die beispielsweise Feststoffteilchen enthalten, durch Abrieb zu erheblichen Beschädigungen an dichtenden Komponenten, wie zum Beispiel an Durchführungsdichtungen der Antriebsgestänge, kommen. Das gleiche gilt für chemisch aggressive Flüssigkeiten wie z.B. Säuren oder Laugen, die Dichtringe von Antriebskomponenten dauerhaft schädigen können.

In der Praxis finden sich zahlreiche Prozesse und Verfahren, bei welchen die laufende Überwachung der Viskosität η eine bedeutende Rolle spielen kann. Beispielsweise muss bei der Produktion integrierter Schaltkreise auf einen Wafer eine Schicht aus Fotolack wohl definierter Dicke aufgebracht werden. Üblicherweise wird der Wafer dazu in schnelle Rotation mit definierter Drehzahl versetzt und der Fotolack über eine Zuführeinrichtung auf die rotierende Scheibe gebracht. Dabei wird der grösste Teil des aufgebrachten Fotolacks aufgrund der Rotation des Wafers weggeschleudert. Die resultierende Schichtdicke auf dem Wafer ist wesentlich unter anderem empfindlich von der Viskosität η des aufzubringenden Fotolacks abhängig. Daher wäre es von Vorteil die Viskosität η des Fotolacks vor dem Aufbringen laufend zu kontrollieren und eventuell durch Zumischung einer oder mehrerer zusätzlicher Komponenten zu korrigieren, d.h. die Viskosität η sollte In-Line und mit hoher Präzision überwacht werden. Als weiteres wichtiges Beispiel sind chemisch-physikalische Polierprozesse, sogenannte CPM-Prozesse (chemical-mechanical polishing) zu nennen, die ebenfalls in der Halbleiterindustrie weit verbreitete Anwendung finden. Bei solchen Prozessen wird üblicherweise eine als "Slurry" bezeichnete Suspension als Polierflüssigkeit verwendet, welche sehr feine Feststoffpartikel enthält, deren gleichmässige Verteilung in der Suspension durch Messung der Viskosität η besonders einfach überwacht werden kann.

Die Aufgabe der Erfindung ist es daher, eine andere Vorrichtung zur Messung der Viskosität eines Fluids mittels eines rotierenden Probekörpers vorzuschlagen, die eine möglichst genaue Bestimmung der Viskosität, insbesondere auch In-Line, also im Verlauf eines Prozesses, gestattet. Darüber hinaus soll ein Verfahren zum Betreiben einer solchen Vorrichtung bereitgestellt werden.

Die diese Aufgaben in apparativer und verfahrenstechnischer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Erfindungsgemäss wird somit eine Vorrichtung und ein Verfahren zur Bestimmung der Viskosität eines Fluids vorgeschlagen, wobei die Vorrichtung einen elektrischen Drehantrieb mit einem Stator mit Statorwicklung und einen in dem Fluid rotierbaren Rotationskörper umfasst. Der Rotationskörper ist als Rotor des Drehantriebs ausgestaltetet und bezüglich des Stators berührungslos magnetisch gelagert. Dabei sind Mittel vorgesehen, so dass der Drehantrieb (2) in einem Arbeitsbereich (A) betreibbar ist, in welchem der Anteil der viskosen Verlustleistung, die durch die Rotation des Rotationskörper (5) im Fluid (1) umgesetzt wird, mindestens 80% der gesamten Leistung des elektrischen Drehantriebs (2), insbesondere mindestens 95% beträgt. Darüberhinaus sind Mittel zur Bestimmung der Viskosität (η) des Fluids (1) aus einem drehmomentbildenden Strom (I_{q}) vorgesehen.

Wesentlich für die Erfindung ist es, dass der Antrieb des Rotationskörpers mit keinerlei Reibungsverlusten in Form von Lagerreibung oder ähnlichem verbunden ist. Das wird dadurch erreicht, dass der Rotationskörper, der als Rotor des elektrischen Drehantriebs der erfindungsgemässen Vorrichtung ausgelegt ist, magnetisch berührungslos bezüglich des Stators gelagert ist. Damit ist der Rotor mechanisch vollständig von den übrigen Komponenten des Drehantriebs entkoppelt. Damit hängt die für die Rotation des Probekörpers im Fluid aufzuwendende elektrische Antriebsleistung im wesentlichen nur von der Viskosität des Fluids ab und ist nicht von zusätzlichen Verlusten mitbestimmt. Wird im Betrieb durch den Rotationskörper keinerlei hydraulische Pumpleistung erbracht, ist der Drehmoment bildende Strom des Drehantriebs im stationären Betrieb, bis auf vernachlässigbare ohmsche Verluste, einzig von der inneren Reibung des Fluids, in dem der Rotationskörper rotiert wird, also allein von der Viskosität des Fluids, bestimmt.

Der elektrische Drehantrieb für die erfindungsgemässe Vorrichtung zur Bestimmung der Viskosität eines Fluids ist vorzugsweise gemäss der EP 0 819 330 bzw. der EP 1 063 753 als lagerloser Motor mit einem magnetisch gelagerten Rotor und einem Stator ausgestaltet, wobei der Antrieb und die magnetische Lagerung des Rotors nach dem Prinzip des lagerlosen Motors eine Einheit bilden. Der Stator weist eine Antriebswicklung mit einem Strang zur Erzeugung eines magnetischen Antriebsfeldes auf, welches ein Drehmoment auf den Rotor bewirkt. Das magnetische Antriebsfeld wird dabei von einem Drehmoment bildenden Strom kontrolliert. Zusätzlich weist der Stator eine mindestens einen Strang umfassende Steuerwicklung zum Erzeugen eines magnetischen Steuerfeldes auf, mit welchem die Position des Rotors bezüglich des Stators über einen Steuerstrom regelbar ist. Das magnetische Antriebsfeld und das magnetische Steuerfeld sind vollständig voneinander entkoppelbar, so dass der Drehmoment bildende Strom der Antriebswicklung allein die gesamte mechanische Motorleistung speist. Die gesamte mechanische Motorleistung, die beim Betrieb des lagerlosen Motors als Drehantrieb der erfindungsgemässen Vorrichtung aufgebracht werden muss, ergibt sich als Summe von viskoser Verlustleistung, hervorgerufen durch die Rotation des Rotationskörpers in einem Fluid und einer eventuell gleichzeitig erzeugten Pumpleistung durch Pumpen des Fluids gegen eine Druckdifferenz. Dabei ergibt sich die Pumpleistung einfach durch Multiplikation des gepumten Flusses mit der entsprechenden Druckdifferenz, während die mechanische Motorleistung proportional dem Produkt aus Drehmoment bildendem Strom und Drehfrequenz des Rotationskörpers im Fluid ist. Damit kann bei bekannter hydraulischer Pumpleistung aus dem Drehmoment bildendem Strom und der Drehfrequenz des Rotationskörpers unmittelbar die viskose Verlustleistung und daraus die Viskosität η des Fluids bestimmt werden.

Insbesondere bei sehr kleiner oder verschwindender hydraulischer Pumpleistung, ist somit bei gegebener konstanter Drehfrequenz die Viskosität η des Fluids direkt proportional zum Drehmoment bildenden Strom.

Im folgenden wird die Erfindung an Hand der schematischen Zeichnung näher erläutert. Es zeigen:
- Fig. 1: Ein Ausführungsbeispiel einer erfindungsgemässen Vorrichtung umfassend einen Tempelmotor mit Stator, Statorwicklung Rotationskörper und Rotorgehäuse;
- Fig. 2: einen Schnitt durch das Rotorgehäuse gemäss Fig. 1 entlang der Linie A - A;
- Fig. 3: einen Schnitt durch das Rotorgehäuse gemäss Fig. 1 entlang der Linie B - B;
- Fig. 4: ein zweites Ausführungsbeispiel einer erfindungsgemässen Vorrichtung mit Zirkulationshilfe;
- Fig. 4a: einen Schnitt durch das Ausführungsbeispiel einer Einrichtung 14 gemäss Fig. 4 entlang der Linie D - D;
- Fig. 5: ein Schnitt durch das Ausführungsbeispiel für eine Zirkulationshilfe gemäss Fig. 4 entlang der Linie C - C;
- Fig. 6: ein Ausführungsbeispiel für eine spezielle Form des Rotationskörpers;
- Fig. 7: ein drittes Ausführungsbeispiel wie Fig. 1, ausgestaltet als Zentrifugalpumpe, wobei der Rotationskörper vollständig von einem Rotorgehäuse umschlossen ist.
- Fig. 7a: ein weiteres Ausführungsbeispiel wie Fig. 7, ausgestaltet als Seitenkanalpumpe;
- Fig. 7b: einen Schnitt durch das Ausführungsbeispiel gemäss Fig. 7a entlang der Linie D-D;
- Fig. 8: einen Schnitt durch das Ausführungsbeispiel gemäss Fig. 7 entlang der Linie E-E;
- Fig. 9: ein viertes Ausführungsbeispiel gemäss Fig. 1, wobei Mittel zur Wärmeisolation vorgesehen sind;
- Fig. 10: schematische Darstellung einer Anordnung zur Messung der Viskosität in einem Gefäss mit Fluid;
- Fig. 11: schematische Darstellung einer Anordnung zur Messung der Viskosität in einem von einem Fluid durchströmten Gefäss;
- Fig. 12: Zeitabhängigkeit des Drehmoment bildenden Stroms bei vorgegebener Drehfrequenz des Rotationskörpers;
- Fig. 13: Zeitabhängigkeit der Drehfrequenz des Rotationskörpers bei vorgegebenem Drehmoment bildendem Strom;
- Fig. 14: Diagramm zur Temperaturabhängigkeit der Viskosität η.
- Fig. 15: eine Darstellung eines Zusammenhangs zwischen Druckdifferenz (oben) bzw. Wirkungsgrad (unten) in einer Rotationspumpe.

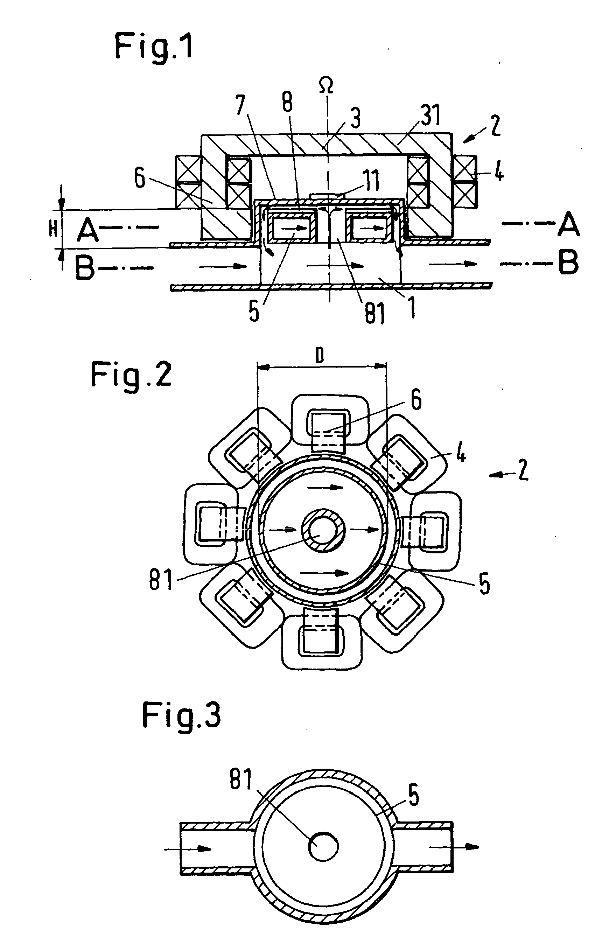

Fig. 1 zeigt in einer schematischen Darstellung ein Ausführungsbeispiel einer erfindungsgemässen Vorrichtung zur Bestimmung der Viskosität η eines Fluids 1. Die Vorrichtung umfasst einen elektrischen Drehantrieb 2 mit einem Stator 3 und einem in dem Fluid 1 rotierbaren Rotationskörper 5, welcher als Rotor 5 des Drehantriebs 2 ausgestaltet ist. Vorzugsweise ist der Durchmesser D des Rotors 5 grösser als seine sich in axialer Richtung erstreckende Höhe H. Wesentlich für die Erfindung ist dabei, dass der Rotationskörper 5 bezüglich des Stators 3 berührungslos magnetisch gelagert ist, wobei keine separaten Magnetlager für den Rotor 5 vorhanden sind. Der Stator 3 des elektrischen Drehantriebs 2 weist eine Statorwicklung 4 auf, die eine Antriebswicklung zur Erzeugung eines magnetischen Antriebsfeldes, sowie eine Steuerwicklung zur Erzeugung eines magnetischen Steuerfeldes umfasst, mit welchem die Position des Rotors 5 bezüglich des Stators 3 über einen Steuerstrom regelbar ist. Darüberhinaus kann die Statorwicklung 4 noch eine weitere Wicklung zur Erzeugung eines Heizstromes umfassen. Das magnetische Antriebsfeld, welches geeignet ist ein magnetisches Drehfeld zu erzeugen, übt ein Drehmoment auf den Rotor 5 aus und setzt den Rotationskörper 5 bezüglich des Stators 3 in Rotation. Das magnetische Drehfeld kann dabei nach dem bekannten Verfahren der feldorientierten Antriebsregelung (im englischen Sprachgebrauch als "vector control" bezeichnet) von einem Drehmoment bildenden Strom I_{q} kontrolliert.

Wenn im Rahmen dieser Anmeldung als elektrische Zustands- oder Steuergrösse der Begriff des elektrischen Stromes Verwendung findet, steht dieser Begriff selbstverständlich stellvertretend auch für andere elektrische Grössen, wie beispielsweise elektrische Spannung oder Leistung, die in analoger Weise zur Charakterisierung geeignet sind.

Der Drehantrieb 2 ist vorzugsweise als Tempelmotor ausgestaltet, bei welchem der Stator 3 eine Vielzahl von, durch einen magnetischen Rückschluss 31 verbundene Statorzähne 6 umfasst, die einen längeren und einen kürzeren Schenkel aufweisen und jeweils L-förmig ausgebildet sind. Dabei erstreckt sich vorzugsweise der längere Schenkel parallel zur Solldrehachse Ω des Rotors 5 und der kürzere Schenkel radial in Richtung zur Solldrehachse Ω. Die kürzeren Schenkel der Vielzahl von Statorzähnen 6 bilden dabei, wie in Fig. 2 gezeigt, einen im wesentlichen zylinderförmigen Bereich, der zur Aufnahme des Rotationskörpers 5 geeignet ist. Der Rotor 5 ist vorzugsweise permanent magnetisch, kann selbstverständlich aber auch als felderregter Rotor 5 ausgestaltet sein. Ein besonderer Vorteil des permanent magnetisch erregten Rotors 5 im Vergleich zum felderregten Rotor 5 liegt darin, dass kein Strom und damit keine Energie für die Felderregung benötigt wird. Zur Bestimmung der Viskosität η durch Messung des Drehmoment bildenden Stroms I_{q} erweist sich daher der Einsatz eines Drehantriebs 2 mit permanent magnetisch erregtem Rotor 5 als besonders vorteilhaft. Der Rotationskörper 5 kann ganz oder teilweise von einem Rotorgehäuse 7 umschlossen sein. Allerdings ist es durchaus denkbar, dass unter bestimmten Umständen der Rotationskörper 5 nicht in einem Rotorgehäuse 7 untergebracht ist. So kann sich, wenn entsprechende elektrische Isolationsmassnahmen getroffen sind, die erfindungsgemässe Vorrichtung ganz oder teilweise innerhalb des Fluids 1, z.B. in einem mit dem Fluid 1 gefüllten Behälter befinden, so dass ein Rotorgehäuse 7 überflüssig ist.

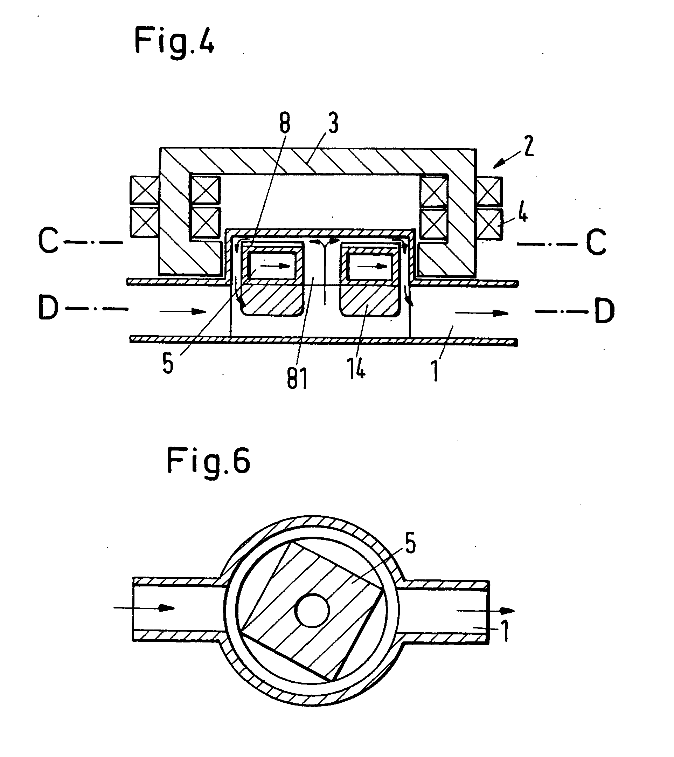

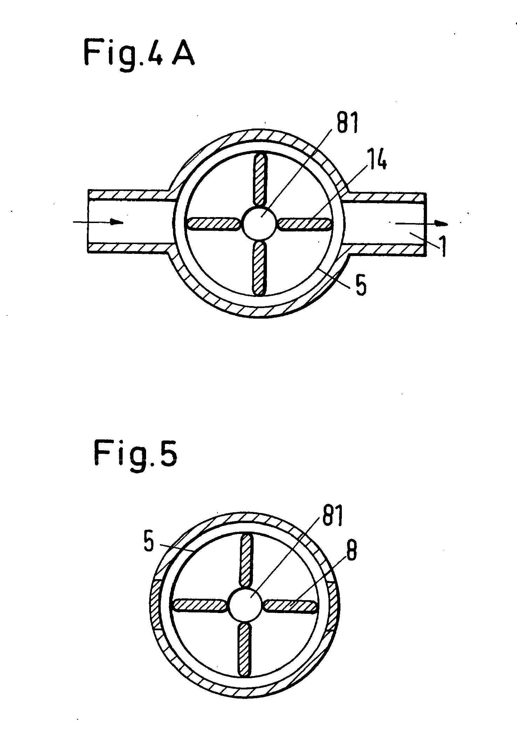

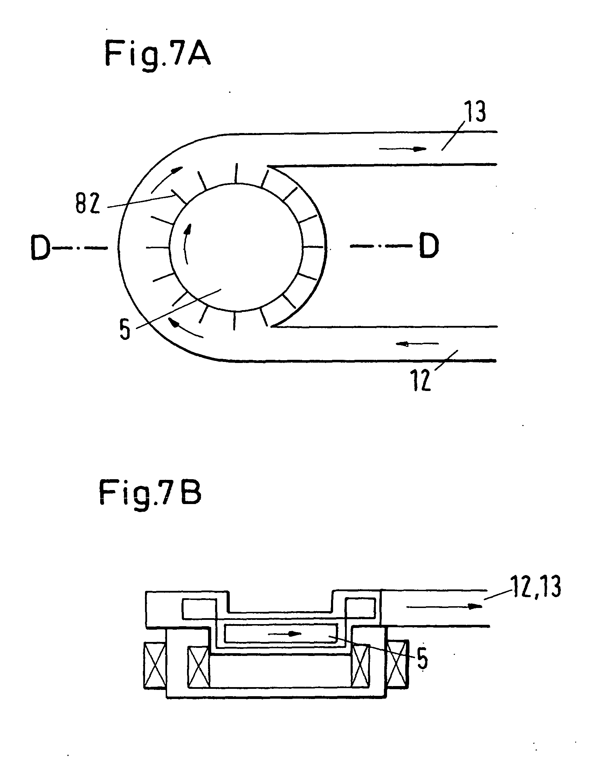

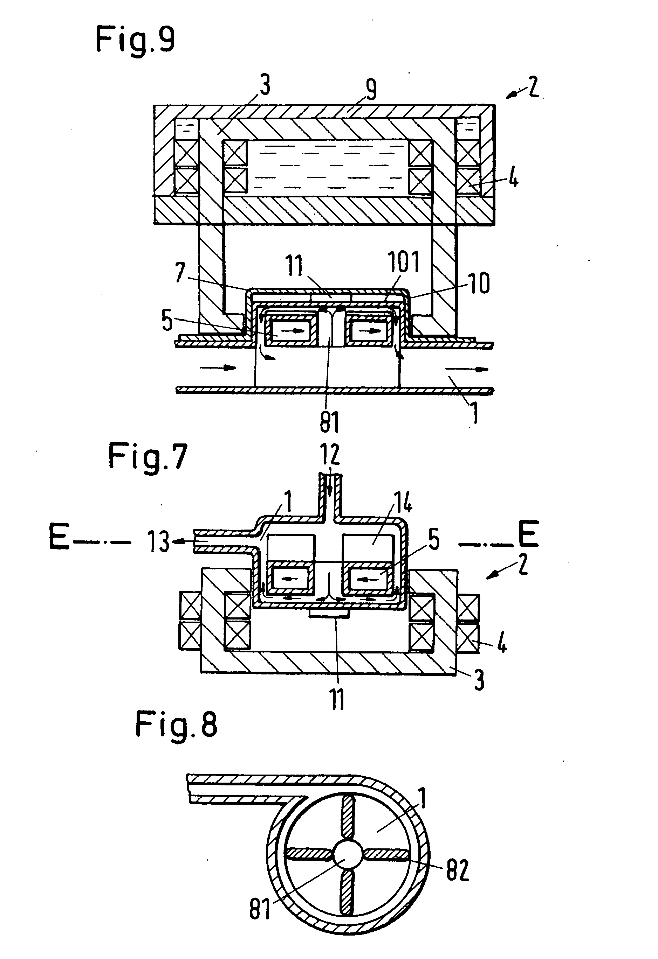

In einem besonders einfachen Ausführungsbeispiel ist der Rotationskörper 5 als flache Scheibe mit im wesentlichen glatten Oberflächen ausgebildet. Angetrieben durch das magnetische Drehfeld rotiert der Rotationskörper 5 im Fluid 1, wobei im stationären Zustand, d.h. wenn der Drehantrieb 2 eine konstante Drehzahl ω erreicht hat, der Drehmoment bildende Strom I_{q} im wesentlichen einzig von der Viskosität η des Fluids 1 bestimmt ist. Da insbesondere bei Messungen im Verlauf eines Prozesses, bei sogenannten In-Line Messungen, der Wert der Viskosität η räumlich und / oder zeitlich schwanken kann, muss dafür Sorge getragen werden, dass eine ausreichende Zirkulation des Fluids 1 gewährleistet ist. Wenn z.B. wie in Fig 1 angedeutet, die Viskosität η eines strömenden Fluids 1 kontinuierlich überwacht werden soll, muss durch geeignete Massnahmen sichergestellt werden, dass der Rotationskörper 5 ständig von neuem Fuid 1 umspült wird. Dazu kann der Rotationskörper 5 eine Zirkulationshilfe 8 umfassen, die im einfachsten Fall wie z.B. in Fig. 1 und Fig. 3 gezeigt, durch eine oder mehrere Bohrungen 81 in radialer und / oder axialer Richtung realisiert sein kann. Vorzugsweise ist an einer Oberfläche des Rotationskörpers 5, wie in Fig. 5 gezeigt, eine schaufelförmige Einrichtungen als Zirkulationshilfe 8 vorhanden. Denkbar sind durchaus auch anders ausgebildete Strukturelemente, die am Rotor 5 oder auch am Rotorgehäuse 7 als Zirkulationshilfe 8 die Zirkulation des Fluids 1 verbessern. Auch eine geeignete Wahl der Form des Rotationskörpers 5 kann die Zirkulation des Fluids 1 verbessern, wie Fig. 6 zeigt. Selbstverständlich ist auch eine Kombination verschiedener Zirkulationshilfen 8 denkbar. Dabei können die strukturierenden Eigenschaften der Zirkulationshilfe 8 auch dazu beitragen, die Messgenauigkeit der erfindungsgemässen Vorrichtung zu erhöhen, da durch die Zirkulationshilfe 8 im allgemeinen die Reibung des Rotationskörpers 5 im Fluid 1 erhöht wird, was insbesondere bei fluktuierender Viskosität η die Fluktuationen im Drehmoment bildenden Strom I_{q} und damit die Messempfindlichkeit erhöht. Zur Erhöhung der Messempfindlichkeit können auch wie in Fig. 4 und Fig 7 schematisch gezeigt, weitere Einrichtungen 14 vorhanden sein, die dazu geeignet sind, zusätzliche Massen von Fluid 1 an den Rotationskörper 5 zu koppeln und damit den Strömungswiderstand des Rotationskörpers 5 im Fluid 1 zu erhöhen. Die Einrichtungen 14 erweisen sich besonders bei nieder viskosen Fluiden 1 bzw. bei Fluiden 1 geringer Dichte als besonders vorteilhaft. Fig. 4a zeigt ein Ausführungsbeispiel der Einrichtungen 14 gemäss Fig. 4 im Schnitt entlang der Linie D-D.

Neben verschiedenen Messonden, z.B. zur Bestimmung von thermodynamischen Zustandsgrössen wie beispielsweise des Drucks, der im Fluid 1 herrscht oder Messonden zur Messung anderer chemischer oder physikalischer Kenngrössen des Fluids 1, wie beispielsweise pH-Sensoren oder optische Sensoren, kann die erfindungsgemässe Vorrichtung auch einen Temperatursensor 11 (Fig. 1) zur Bestimmung der Temperatur T des Fluids 1 aufweisen. Bei einer Vielzahl von Fluiden 1 hängt die Viskosität η nämlich mehr oder weniger stark von der Temperatur T ab, so dass mit der Viskosität η gleichzeitig und am gleichen Ort auch die Temperatur T bestimmt werden muss. Unter bestimmten Umständen kann es notwendig sein, dass die erfindungsgemässe Vorrichtung, die in der Statorwicklung 2 selbstverständlich eine gewisse Menge an ohmscher Wärme erzeugt, thermisch vom Fluid 1 weitgehend zu entkoppeln ist. Dazu sind verschiedene Massnahmen denkbar, von denen einzelne exemplarisch im Folgenden erläutert werden. Wie in Fig. 9 gezeigt können beispielsweise die längeren und / oder die kürzeren Schenkel der L-förmig ausgebildeten Statorzähne 6 so ausgestaltet sein, dass der die Statorwicklung 4 umfassende Bereich des Stators 3 in Bezug auf den Rotationskörper 5 so angeordnet ist, dass maximal 50 %, vorzugsweise höchstens 5%, der thermischen Leistung der Statorwicklung 4 in das Fluid 1 einkoppelbar ist. Eine thermische Entkopplung von Fluid 1 und Statorwicklung 4 kann aber auch z.B. durch Mittel zur Wärmeisolation erreicht werden. So kann wie in Fig. 9 gezeigt, sowohl der Stator 3 des Drehantriebs 2 ein Isolationsmittel 9 zur Wärmeisolation aufweisen, ebenso wie das Rotorgehäuse 7 eine Einrichtung 10 zur Wärmeisolation umfassen kann. Das Isolationsmittel 9 kann beispielsweise als Kühlmantel ausgestaltet sein, der ein Gehäuse mit Kühlrippen umfasst, welches zusätzlich noch fremdgekühlt sein kann und / oder weitere Einrichtungen zum Abführen von Wärme aufweisen kann. Die Einrichtung 10 zur Wärmeisolation des Rotorgehäuses 7 kann, wie in Fig. 9 gezeigt, als Ummantelung ausgestaltet sein, so dass zwischen der Einrichtung 10 und dem Rotorgehäuse 7 ein Zwischenraum 101 ausgebildet ist, der zur Aufnahme des Temperatursensors 11, sowie zur Aufnahme wärmeisolierender Stoffe geeignet ist. Denkbar ist auch, dass der Zwischenraum 101 evakuierbar ist, wodurch eine besonders effektive Wärmeisolation erzielbar ist. Selbstverständlich kann auch die Einrichtung 10 ebenso wie das Isolationsmittel 9 als Kühlmantel ausgestaltet sein, der ein Gehäuse mit Kühlrippen umfasst, welches zusätzlich noch fremdgekühlt sein kann und / oder weitere Einrichtungen zum Abführen von Wärme aufweist.

Eine thermische Entkopplung von Statorwicklung 4 und Fluid 1 ist jedoch nicht in jedem Fall wünschenswert. Häufig muss die temperaturabhängige Viskosität η bei einer oder mehreren definierten Temperaturen T ermittelt werden, d.h. die Temperatur T des Fluids muss steuer- und / oder regelbar sein. In einem solchen Fall ist die erfindungsgemässe Vorrichtung auch zur Temperierung des Fluids 1, d.h. gleichzeitig als Heizung einsetzbar. Dazu kann einer der Wicklungen des Stators 3 ein in seiner Amplitude und Frequenz einstellbarer Heizstrom aufgeprägt werden, wodurch der Stator 3 und damit das Fluid 1 durch thermische Kopplung an die Statorzähne 6 auf eine vorgebbare Temperatur T gebracht werden kann. Zur Erzeugung des Heizstromes kann die Statorwickulung 4 auch noch eine zusätzliche separate Heizwicklung umfassen. Alternativ kann bei einer feldorientierten Regelung des Antriebs zusätzlich zum Drehmoment bildenden Strom I_{q} ein Magnetisierungsstrom eingeprägt werden, welcher insbesondere im Fall eines permanent magnetisch erregten Antriebs 2 in erster Linie eine Erhöhung der Verluste in der Statorwicklung 4 bewirkt und damit eine Regelung der Temperatur T erlaubt.

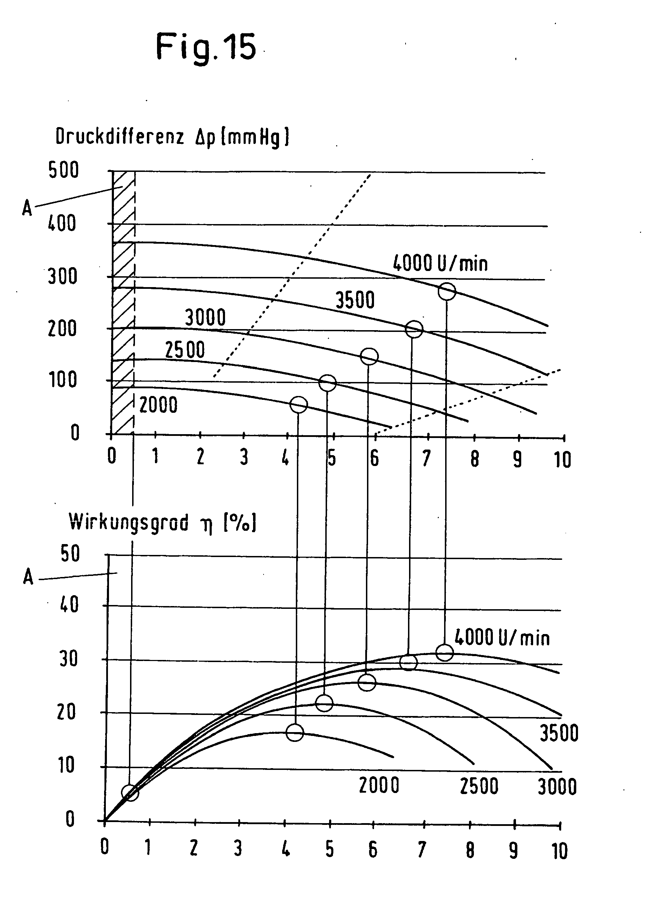

Durch geeignete Anordnung und Ausbildung des Rotationskörper 5 kann erreicht, werden dass der rotierende Rotationskörper 5 zusätzlich eine einstellbare hydraulische Pumpleistung erbringt. Dabei wird der Drehantrieb 2, wie in Fig. 15 beispielhaft dargestellt, vorzugsweise in einem Arbeitsbereich A betrieben, in welchem der Anteil der viskosen Verlustleistung, die durch die Rotation des Rotationskörpers 5 im Fluid 1 umgesetzt wird, mindestens 80 % der mechanischen Leistung des elektrischen Drehantriebs 2 beträgt, insbesondere mindestens 95 %. Bei der Bestimmung der Viskosität η aus dem Drehmoment bildenden Strom I_{q} muss dann selbstverständlich die hydraulische Pumpleistung, die sich als Produkt des gepumpten Volumenflusses mit der entsprechenden Druckdifferenz Δp ergibt, berücksichtigt werden. Wird die erfindungsgemässe Vorrichtung wie oben beschrieben im Arbeitsbereich A betrieben, ist das pro Zeiteinheit gepumpte Volumen direkt proportional zur Drehfrequenz ω des Drehantriebs 2 und damit besonders leicht bestimmbar. Es sei denn, die hydraulische Pumpleistung ist im Vergleich zur viskosen Verlustleistung vernachlässigbar klein. Die Fig. 7 und 7a zeigen exemplarisch je ein Ausführungsbeispiel der erfindungsgemässen Vorrrichtung, die geeignet sind, eine hydraulische Pumpleistung zu erzeugen. Das Ausführungsbeispiel in Fig. 7 zeigt schematisch eine Zentrifugalpumpe, bei welcher der Rotationskörper 5 vollständig vom Rotorgehäuse 7 umschlossen ist. Das Rotorgehäuse 7 umfasst hier einen Zufluss 12 zum Zuführen des Fluids 1 und einen Abluss 13 zum Abführen des Fluids 1. Fig. 7a zeigt als andere Variante eines solchen Ausführungsbeispiels schematisch eine Seitenkanalpumpe. Die Fig. 7b und Fig. 8 zeigen je einen Schnitt entlang der Linie D-D gemäss Fig. 7a bzw. entlang der Linie E-E gemäss Fig. 7 mit Pumpschaufeln 82 zur Erzeugung einer hydraulischen Pumpleistung.

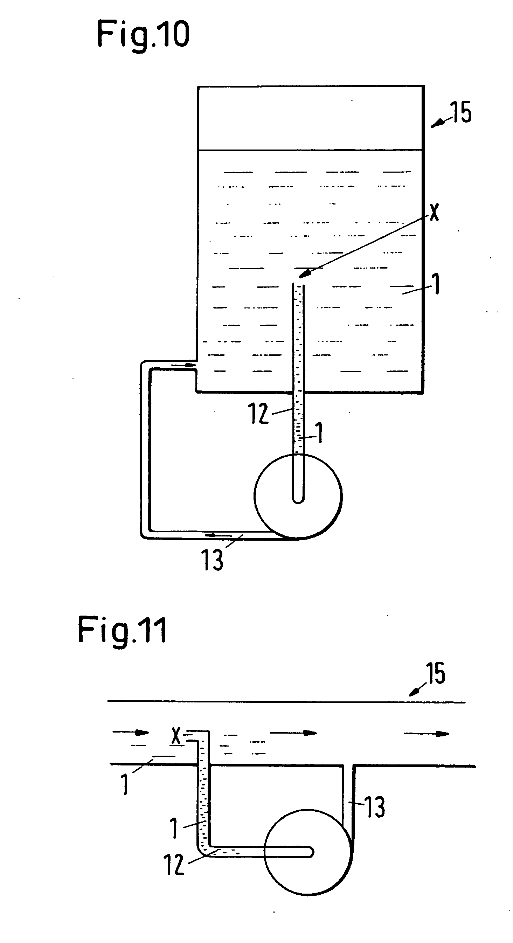

Die in den Fig. 7 und 7a schematische gezeigten Ausführungsformen der erfindungsgemässen Vorrichtung zur Bestimmung der Viskosität η erweisen sich als besonders vorteilhaft, wenn, wie in den Fig. 10 und 11 gezeigt, die Viskosität η des Fluids 1 z.B. nacheinander, in einer vorgebbaren zeitlichen Abfolge, an verschiedenen Orten X innerhalb eines das Fluid 1 enthaltenden Gefässes 15, bestimmt werden sollen. Das Gefäss 15 kann z.B. als Vorratsbehälter, wie in Fig. 10 gezeigt oder auch als Leitung wie in Fig. 11 skizziert oder anders in einer anderen Form ausgeführt sein. Bei dem in Fig. 10 gezeigten Gefäss 15 kann es sich beispielsweise um ein Reaktionsgefäss handeln, in welchem sich ein Fluid 1 befindet, das eine langsame chemische Reaktion durchläuft, in deren Verlauf sich die Viskosität η zeitlich und /oder räumlich ändert. Der Zufluss 12 kann beispielsweise als verschiebbare Zuleitung ausgestaltet sein, die an verschiedene Punkte innerhalb des Gefässes 15 verschiebbar ist, so dass der Verlauf der chemischen Reaktion durch Bestimmung der Viskosität η zeitlich und räumlich aufgelöst beobachtbar ist. Dabei sind neben chemischen selbstverständlich auch physikalische Prozesse, wie das Durchmischen eines mehrkomponentigen Fluids 1 oder ähnliche Prozesse beobachtbar. So kann z.B. durch Ablagerungsprozesse oder aufgrund anderer Umstände in einem von einem Fluid 1 durchströmten Rohr, wie in Fig. 11 gezeigt, die Viskosität η vom Ort X innerhalb des Rohres abhängen. Über den Zufluss 12, der auch hier als verschiebbare Zuleitung ausgestaltet sein kann, ist auch die Viskosität η in einem fliessenden Fluid 1 in Abhängigkeit vom Ort und / oder der Zeit möglich. Selbstverständlich kann die erfindungsgemässe Vorrichtung, wie bereits ausgeführt, auch gleichzeitig eine hydraulische Pumpleistung erbringen und so z.B. bei dem in Fig. 10 gezeigten Ausführungsbeispiel zusätzlich die Durchmischung im Gefäss 15 unterstützen.

Dabei kann z.B. die Viskosität η auch kontinuierlich an einem oder mehreren Orten X innerhalb des Gefässes 15 gemessen werden. Der so ermittelte momentane Wert der Viskosität η kann dann zur Steuerung und / oder Regelung eines chemischen oder physikalischen Prozesses, mittels nicht gezeigter zusätzlicher mechanischer und / oder elektronischer Einrichtungen dienen. Beispielsweise kann so die Zufuhr von Stoffen, die an einem chemischen oder physikalischen Prozess beteiligt sind oder auch die Einstellung von Prozessparametern, wie beispielsweise der Temperatur T, in Abhängigkeit von der Viskosität η erfolgen.

Wie bereits erwähnt, hängt die innere Reibung F_{R} eines Fluids 1 neben der Viskosität η prinzipiell auch von thermodynamischen Zustandsgrössen, wie beispielsweise Druck und Temperatur T ab und ist darüber hinaus eine Funktion weiterer physikalischer Kenngrössen, insbesondere der Dichte des Fluids 1. Eine Möglichkeit, die Dichte eines Fluids 1 mit Hilfe der erfindungsgemässen Vorrichtung zu bestimmen, besteht darin, dass der Rotationskörper 5 nicht mit einer festen Drehzahl ω im Fluid 1 rotiert wird, sondern die Drehzahl ω und / oder der Drehmoment bildende Strom I_{q} gemäss einem vorgebbaren Schema variiert wird. Bei gegebener Temperatur und bekannter Viskosität hängt die Variation der inneren Reibung F_{R} bei sich verändernder Drehzahl ω des Rotationskörpers 5 bei bekanntem Trägheitsmoment des Rotationskörpers 5 im wesentlichen nur von der Dichte des Fluids 1 ab. Der Grund dafür liegt darin, dass, wenn die Drehzahl ω des im Fluid 1 rotierenden Rotationskörpers 5 geändert wird, die an den Rotationskörper 5 aufgrund der inneren Reibung F_{R} gekoppelten Flüssigkeitsschichten, d.h. deren Massen, beschleunigt werden müssen. Die zeitlichen Änderungen der Drehzahl ω stehen dabei natürlich in einem eineindeutigen Zusammenhang den korrespondierenden Änderungen im Drehmoment bildende Strom I_{q}.

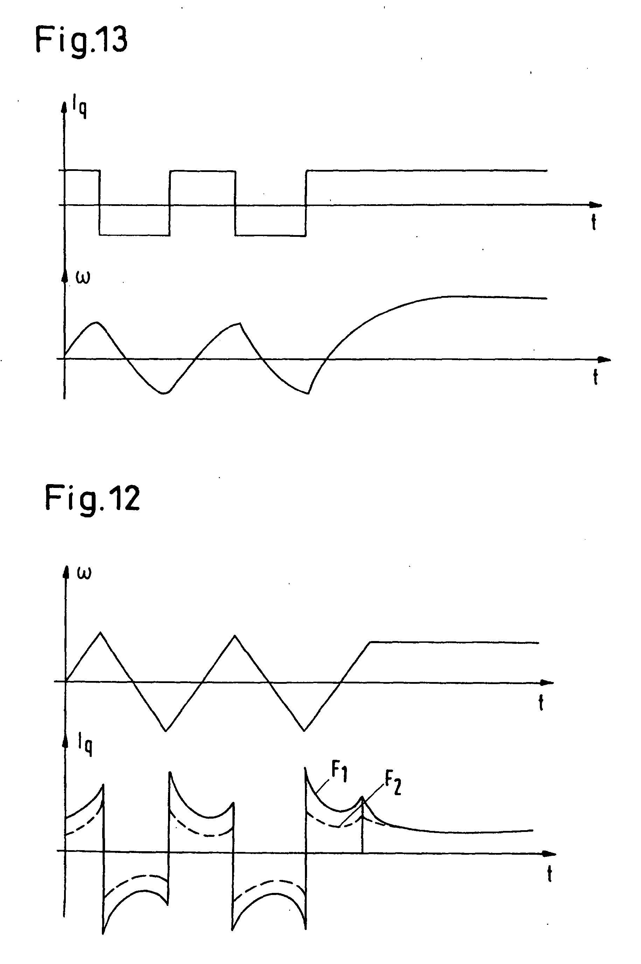

Zwei grundlegende Variante eines Verfahrens zur Bestimmung der Dichte eines Fluids 1 mit der erfindungsgemässen Vorrichtung werden mit Bezug auf die Fig. 12 und Fig. 13 im Folgenden beschrieben. Nachdem in einem ersten, in Fig 12 und Fig. 13 nicht gezeigten, Verfahrensschritt die Viskosität η bestimmt wurde, wird durch eine geeignete, nicht gezeigte, Steuerung oder Regelung die Drehzahl ω des Rotationskörpers 5 gemäss einem vorgebbaren Schema variiert. In Fig. 12 wird die Drehzahl ω nach einer Sägezahnfunktion in Abhängigkeit von der Zeit t variiert. Selbstverständlich kann die Variation auch gemäss jedem anderen periodischen oder nicht periodischen vorgebbaren Schema erfolgen. Beispielsweise kann die Drehzahl ω des Rotationskörpers 5 einem sinusförmigen Verlauf oder dem Verlauf einer Rechteckfunktion folgen oder die Rotation kann z.B. impulsförmig angetrieben erfolgen. Selbstverständlich kann die Drehzahl ω insbesondere auch konstant gehalten werden. Wenn die Drehzahl ω vorgegeben ist, ist damit eineindeutig ein entsprechender Drehmoment bildenden Stromes I_{q} verbunden, aus dessen zeitabhängigem Verlauf die Dichte des Fluids 1 bestimmt werden kann. Im oberen Teil des in Fig. 12 gezeigten Diagramms ist die Drehfrequenz ω des Rotationskörpers 5 in Abhängigkeit von der Zeit t aufgetragen. Der untere Teil des Diagramms zeigt schematisch den Verlauf F₁ und F₂ des zugehörigen Drehmoment bildenden Stroms I_{q} für zwei Fluide 1 unterschiedlicher Dichte. Dabei ist der Verlauf F₁ einem Fluid 1 mit höherer Dichte zugeordnet, der Verlauf F₂ charakterisiert dagegen ein Fluid 1 mit geringerer Dichte.

In einer weiteren Variante wird durch eine nicht gezeigte Steuerung oder Regelung der Verlauf des Drehmoment bildenden Stromes I_{q} vorgegeben, der, wie in Fig. 13 im oberen Teil des Diagramms gezeigt, z.B. einen rechteckförmigen Verlauf in Abhängigkeit von der Zeit t nehmen kann. Selbstverständlich kann der Drehmoment bildende Strom I_{q} auch jede andere Zeitabhängigkeit aufweisen, insbesondere kann der Drehmoment bildende Strom I_{q} auch konstant gehalten werden. Bei dieser Variante des erfindungsgemässen Verfahrens wird die Dichte des Fluids 1 aus dem resultierenden zeitlichen Verlauf der Drehzahl ω des Rotationskörpers 5 bestimmt, der in Fig. 13 schematisch im unteren Teil des Diagramms skizziert ist.

Erfindungsgemäss wird also eine Vorrichtung und ein Verfahren zur Bestimmung der Viskosität η eines Fluids 1 vorgeschlagen, die einen elektrischen Drehantrieb 2 mit einem in dem Fluid 1 rotierbaren Rotationskörper 5 umfasst. Wesentlich für die Erfindung ist dabei, dass der Rotationskörper 5, der als Rotor 5 des Drehantriebs 2 ausgestaltet ist, bezüglich des Stators 3 durch einen den Rotor 5 umfassenden Gehäuseabschnitt hindurch berührungslos magnetisch gelagert ist. Die Viskosität η wird dabei vorzugsweise aus der vom Drehantrieb 2 bzw. dem damit verknüpften Drehmoment bildenden Strom I_{q} bestimmt.

Die vorgeschlagene erfindungsgemässe Vorrichtung sowie das vorgeschlagene Verfahren zeigen dabei erhebliche Vorteile und Verbesserungen im Vergleich zum Stand der Technik. Da der Rotationskörper 5 vollkommen berührunglos gelagert ist, weist der Drehantrieb 2 keinerlei Lager oder Antriebselemente, die aufwendige Dichtungen oder ähnliche Einrichtungen erfordern, auf. Damit eignet sich die erfindungsgemässe Vorrichtung einerseits ganz hervorragend, wenn chemisch oder physikalisch aggressive Fluide 1 zu untersuchen sind, die bekanntermassen insbesondere Dichtungen und Lager angreifen und auf Dauer schädigen können. Das Spektrum der möglichen Einsatzgebiete ist damit deutlich gegenüber dem Stand der Technik erweitert. Darüber hinaus ist die erfindungsgemässe Vorrichtung weitgehend wartungsfrei; zumindest können die Wartungsintervalle deutlich ausgedehnt werden, was letztlich zu einer Steigerung der Zuverlässigkeit und Wirtschaftlichkeit der vorgeschlagenen Vorrichtung gegenüber bekannten Viskosimetern führt.

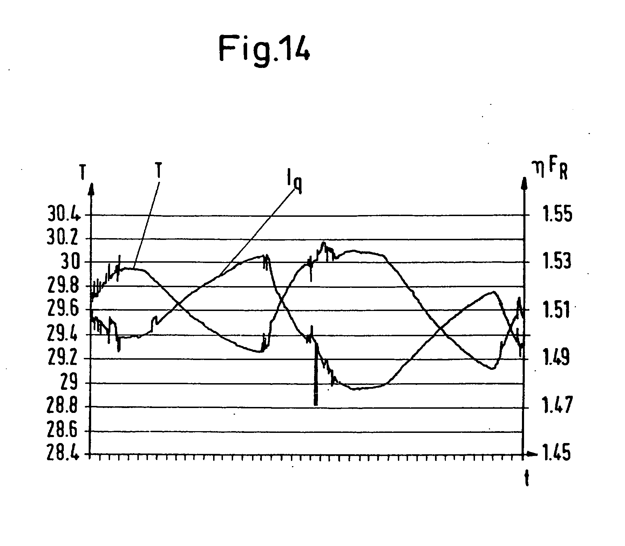

Ein besonderer Vorteil besteht in der ausserordentlich hohen Empfindlichkeit der erfindungsgemässen Vorrichtung bei der Bestimmung der Viskosität η. Dadurch, dass der Rotationskörper 5 vollkommen berührungslos gelagert ist, sind keinerlei zusätzliche Reibungsverluste, z.B. aufgrund von Lagerreibung, bei der Bestimmung der Viskosität η des Fluids 1 zu berücksichtigen. Der Drehmoment bildende Strom I_{q} bildet somit unmittelbar ein Mass für die innere Reibung F_{R} des Fluids 1. Das heisst, es können auch noch Reibungsverluste im Fluid 1 detektiert werden, die vergleichbar oder kleiner als die üblicherweise unvermeidlich auftretenden Reibungsverluste in herkömmlichen Viskosimetern sind. Die ausserordnetlich hohe Messgenauigkeit der erfindungsgemässen Vorrichtung wird eindrucksvoll durch Fig. 14 demonstriert. Die Kurve T_{F} zeigt den Verlauf der Temperatur T eines Fluids 1 in Abhängigkeit von der Zeit t. Die Temperatur T ist an der linken Ordinate des Diagramms in Fig. 14 aufgetragen. Die Kurve I_{q} zeigt den Verlauf des zugehörigen Drehmoment bildenden Stroms I_{q} und die rechte Ordinate des Diagramms die daraus bestimmte Viskosität η des Fluids 1, angegeben in centi Poise. Wie das Diagramm deutlich zeigt, erlaubt die erfindungsgemässe Vorrichtung mühelos Messgenauigkeiten im Bereich von einem zehntel Prozent und besser.

Die erfindungsgemässe Vorrichtung gestattet jedoch nicht nur die Bestimmung der Viskosität η eines Fluids 1, sondern erlaubt es in einer besonderen Ausführungsform gleichzeitig mittels eines in die Statorwicklung 4 einspeisbaren Heizstroms das Fluid 1 zu temperieren oder zusätzlich als Pumpvorrichtung einzusetzen. Das erfindungsgemässe Verfahren ermöglicht es überdies, durch Variation des Drehmoment bildenden Stroms I_{q} und / oder der Drehzahl ω des Rotationskörpers 5 auch weitere physikalische Kenngrössen des Fluids 1, wie zum Beispiel dessen Dichte zu bestimmen. Damit kann die erfindungsgemässe Vorrichtung zur Bestimmung der Viskosität eines Fluids 1 letztlich sogar als universell einsetzbare Regeleinheit zur Steuerung oder Regelung ganz unterschiedlicher physikalischer oder chemischer Prozesse Verwendung finden.

## Patentansprüche

1. Vorrichtung zur Bestimmung der Viskosität (η) eines Fluids (1) umfassend einen elektrischen Drehantrieb (2) mit einem Stator (3), der eine Statorwicklung (4) aufweist und einem in dem Fluid (1) rotierbaren Rotationskörper (5), welcher als Rotor (5) des Drehantriebs (2) ausgestaltetet ist, wobei der Rotationskörper (5) bezüglich des Stators (3) berührungslos magnetisch gelagert ist, **dadurch gekennzeichnet, dass** Mittel vorgesehen sind, so dass der Drehantrieb (2) in einem Arbeitsbereich (A) betreibbar ist, in welchem der Anteil der viskosen Verlustleistung, die durch die Rotation des Rotationskörper (5) im Fluid (1) umgesetzt wird, mindestens 80% der gesamten Leistung des elektrischen Drehantriebs (2), insbesondere mindestens 95% beträgt und Mittel zur Bestimmung der Viskosität (η) des Fluids (1) aus einem drehmomentbildenden Strom (I_{q}) vorgesehen sind.

2. Vorrichtung nach Anspruch 1, wobei bei dem elektrischen Drehantrieb (2) der Antrieb und die magnetische Lagerung des Rotors (5) nach dem Prinzip des lagerlosen Motors eine Einheit bilden.

3. Vorrichtung nach Anspruch 1 oder 2, wobei der Rotationskörper (5) bezüglich des Stators (3) berührungslos durch einen den Rotationskörper (5) umfassenden Gehäuseabschnitt hindurch magnetisch gelagert ist.

4. Vorrichtung nach einem der Ansprüche 1 bis 3, wobei der Durchmesser (D) des Rotors (5) grösser ist als seine sich in axialer Richtung erstreckende Höhe (H).

5. Vorrichtung nach einem der Ansprüche 1 bis 4, wobei der elektrische Drehantrieb (2) als Tempelmotor ausgestaltet ist, bei welchem Tempelmotor der Stator (3) eine Vielzahl durch einen magnetischen Rückschluss (31) verbundene Statorzähne (6) aufweist, die jeweils L-förmig ausgebildet sind, und sich jeweils der eine Schenkel des Statorzahns (6) parallel zur Solldrehachse (Ω) des Rotors (5) und der andere Schenkel des Statorzahns (6) radial in Richtung zur Solldrehachse (Ω) erstreckt, und wobei auf dem längeren Schenkel des Statorzahns (6) die Statorwicklung (4) des elektrischen Drehantriebs (2) angeordnet ist

6. Vorrichtung nach einem der Ansprüche 1 bis 5 mit einem permanent magnetischen Rotor (5).

7. Vorrichtung nach einem der Ansprüche 1 bis 6, wobei der Rotationskörper (5) ganz oder teilweise von einem Rotorgehäuse (7) umschlossen ist.

8. Vorrichtung nach einem der Ansprüche 1 bis 7, wobei der Rotationskörper (5) Zirkulationshilfen (8) zur Verbesserung der Zirkulation des Fluids (1) aufweist.

9. Vorrichtung nach einem der Ansprüche 1 bis 8, bei welcher der Stator (3) Isolationsmittel (9) zur Wärmeisolation aufweist.

10. Vorrichtung nach einem der Ansprüche 1 bis 9, bei welcher das Rotorgehäuse (7) Einrichtungen (10) zur Wärmeisolation umfasst.

11. Vorrichtung nach einem der Ansprüche 1 bis 10, welche einen Temperatursensor (11) zur Bestimmung der Temperatur (T) des Fluids (1) aufweist.

12. Vorrichtung nach einem der Ansprüche 1 bis 11, bei welcher der Rotationskörper (5) so ausgebildet und angeordnet ist, dass er im wesentlichen keine hydraulische Pumpleistung erbringt.

13. Vorrichtung nach einem der Ansprüche 1 bis 12, die mit einem Zufluss (12) und einem Abfluss (13) als Rotationspumpe für das Fluid (1) ausgebildet ist.

14. Verfahren zur Bestimmung der Viskosität (η) eines Fluids (1) mittels einer Vorrichtung nach Anspruch 1, wobei der Drehantrieb (2) in einem Arbeitsbereich (A) betrieben wird, in welchem der Anteil der viskosen Verlustleistung, die durch die Rotation des Rotationskörper (5) im Fluid (1) umgesetzt wird, mindestens 80% der gesamten Leistung des elektrischen Drehantriebs (2), insbesondere mindestens 95% beträgt und die Viskosität (η) aus dem drehmomentbildenden Strom (I_{q}) bestimmt wird.

15. Verfahren zur Bestimmung der Viskosität (η) eines Fluids (1) nach Anspruch 14, wobei die Viskosität (η) durch Messung von elektrischen Betriebsdaten und / oder mechanischen Betriebsdaten des elektrischen Drehantriebs (2) bestimmt wird.

16. Verfahren nach Anspruch 14 oder 15, wobei das Verfahren In-Line betrieben wird.

17. Verfahren nach einem der Ansprüche 14 bis 16, bei welchem der Rotationskörper (5) eine hydraulische Pumpleistung erbringt.

18. Verfahren nach einem der Ansprüche 14 bis 17, bei welchem zur Bestimmung der Viskosität (η) des Fluids (1) der drehmomentbildende Strom (I_{q}) durch die Statorwicklung (4) des Drehantriebs (2) gemäss einem vorgebbaren Schema variert wird.

19. Verfahren nach einem der Ansprüche 14 bis 18, bei welchem zur Bestimmung der Viskosität (η) des Fluids (1) die Drehzahl (ω) des Drehantriebs (2) gemäss einem vorgebbaren Schema variiert wird.

20. Verfahren nach einem der Ansprüche 14 bis 19, bei welchem die Temperatur (T) des Fluids (1) durch Variation eines der Statorwicklung (4) aufgeprägten Heizstromes geregelt oder gesteuert wird.

21. Verfahren nach einem der Ansprüche 14 bis 20, welches Verfahren einen ersten Betriebsmodus und mindestens einen weiteren Betriebsmodus umfasst, wobei in dem ersten Betriebsmodus mindestens eine physikalische Kenngrösse des Fluids (1), vorzugsweise die Viskosität (η), bestimmt wird und in dem weiteren Betriebsmodus eine weitere physikalische Grösse, vorzugsweise die Dichte, des Fluids (1) bestimmt wird.

22. Verfahren nach einem der Ansprüche 14 bis 21, bei welchem Verfahren mindestens eine physikalische Kenngrösse des Fluids (1) in Abhängigkeit vom Ort (X) und / oder der Zeit (t) bestimmt wird.

## Claims

1. An apparatus for determining the viscosity (η) of a fluid (1) including an electrical rotary drive (2) with a stator (3), which has a stator winding (4), and with a rotational body (5) rotatable in the fluid (1) and which is designed as a rotor (5) of the rotary drive (2), wherein the rotational body (5) is magnetically journalled in a contact-free manner with respect to the stator (3), **characterised in that** means are provided so that the rotary drive (2) is operated in an operating range (A) in which the portion of the viscose power loss, which is transformed by the rotation of the rotational body (5) in the fluid (1), amounts to at least 80% of the overall power of the electrical rotary drive (2), in particular at least 95%, and wherein means for the determination of the viscosity (η) of the fluid (1) by means of a torque forming current (I_{q}) are provided.

2. An apparatus in accordance with claim 1, wherein the drive and the magnetic support for the rotor (5) form one unit according to the principle of the bearing-free motor in the electrical rotary drive (2).

3. An apparatus in accordance with claim 1 or claim 2, wherein the rotational body (5) is magnetically journalled in a contact-free manner with respect to the stator (3) through a housing section surrounding the rotational body (5).

4. An apparatus in accordance with any one of claims 1 to 3, wherein the diameter (D) of the rotor (5) is larger than its height (H) extending in the axial direction.

5. An apparatus in accordance with any one of claims 1 to 4, wherein the electrical rotary drive (2) is designed as a temple motor in which the stator (3) has a plurality of stator teeth (6) connected by a magnetic return yoke (31) which are each formed in L shape, and wherein the one limb of the stator tooth (6) extends parallel to the desired axis of rotation (Ω) of the rotor (5) and the other limb of the stator tooth (6) extends radially in the direction towards the desired axis of rotation (Ω), and wherein the stator winding (4) of the electrical rotary drive (2) is arranged on the longer limb of the stator tooth (6).

6. An apparatus in accordance with any one of claims 1 to 5 having a permanently magnetic rotor (5).

7. An apparatus in accordance with any one of claims 1 to 6, wherein the rotational body (5) is fully or partly surrounded by a rotor housing (7).

8. An apparatus in accordance with any one of claims 1 to 7, wherein the rotational body (5) has circulation aids (8) for improving the circulation of the fluid (1).

9. An apparatus in accordance with any one of claims 1 to 8, in which the stator (3) has insulating means (9) for heat insulation.

10. An apparatus in accordance with any one of claims 1 to 9, in which the rotor housing (7) includes devices (10) for heat insulation.

11. An apparatus in accordance with any one of claims 1 to 10, which has a temperature sensor (11) for determining the temperature (T) of the fluid (1).

12. An apparatus in accordance with any one of claims 1 to 11, in which the rotational body (5) is formed and arranged such that it substantially does not supply any hydraulic pump power.

13. An apparatus in accordance with any one of claims 1 to 12, which is formed with an inflow (12) and an outflow (13) as the rotation pump for the fluid (1).

14. A method for determining the viscosity (η) of a fluid (1) by means of an apparatus in accordance with claim 1 so that the rotary drive (2) is operated in an operating range (A) in which the portion of the viscose power loss, which is transformed by the rotation of the rotational body (5) in the fluid (1), amounts to at least 80% of the overall power of the electrical rotary drive (2), in particular at least 95% and the viscosity (η) is determined by means of the torque forming current (I_{q}).

15. A method for determining the viscosity (η) of a fluid (1) in accordance with claim 14, wherein the viscosity (η) is determined by a measurement of electrical operating data and/or of mechanical operating data of the electrical rotary drive (2).

16. A method in accordance with claim 14 or claim 15, wherein the method is operated in-line.

17. A method in accordance with any one of claims 14 to 16, in which the rotational body (5) supplies a hydraulic pump power.

18. A method in accordance with any one of claims 14 to 17, in which the torque forming current (I_{q}) is varied by the stator winding (4) of the rotary drive (2) in accordance with a pre-settable scheme for determining the viscosity (η) of the fluid (1).

19. A method in accordance with any one of claims 14 to 18, in which the speed (ω) of the rotary drive (2) is varied in accordance with a pre-settable scheme for determining the viscosity (η) of the fluid (1).

20. A method in accordance with any one of claims 14 to 19, in which the temperature (T) of the fluid (1) is regulated or controlled by a variation of a heating current applied to the stator winding (4).

21. A method in accordance with any one of claims 14 to 20, which includes a first operating mode and at least one further operating mode, wherein in the first operating mode at least one physical characteristic of the fluid (1), preferably the viscosity (η), is determined and, in the further operating mode, a further physical parameter is determined, preferably the density, of the fluid (1).

22. A method in accordance with any of claims 14 to 21, in which at least one physical characteristic of the fluid (1) is determined as a function of the location (X) and/or of the time (t).

## Revendications

1. Dispositif de détermination de la viscosité (η) d'un fluide (1), comprenant un entraînement rotatif électrique (2) avec un stator (3) présentant un enroulement de stator (4) et un élément rotatif (5) pouvant tourner dans le fluide (1) qui est réalisé en tant que rotor (5) de l'entraînement rotatif (2), l'élément rotatif (5) étant supporté magnétiquement sans contact par rapport au stator (3), **caractérisé en ce qu'**il est prévu des moyens permettant de faire fonctionner l'entraînement rotatif (2) dans une plage de travail (A) dans laquelle la part de la perte visqueuse convertie par la rotation de l'élément rotatif (5) dans le fluide (1) est au moins égale à 80% de la puissance totale de l'entraînement rotatif électrique (2), en particulier au moins égale à 95%, et **en ce qu'**il est prévu des moyens de détermination de la viscosité (η) du fluide (1) à partir d'un courant générateur de couple (I_{q}).

2. Dispositif selon la revendication 1, dans lequel, dans l'entraînement rotatif électrique (2), l'entraînement et le supportage magnétique du rotor (5) forment un ensemble selon le principe du moteur sans paliers.

3. Dispositif selon la revendication 1 ou la revendication 2, dans lequel l'élément rotatif (5) est supporté magnétiquement sans contact par rapport au stator (3) d'un bout à l'autre dans un segment de boîtier comprenant l'élément rotatif (5).

4. Dispositif selon l'une des revendications 1 à 3, dans lequel le diamètre (D) du rotor (5) est supérieur à sa hauteur (H) s'étendant dans le sens axial.

5. Dispositif selon l'une des revendications 1 à 4, dans lequel l'entraînement rotatif électrique (2) est réalisé sous la forme d'un moteur à lévitation dans lequel le stator (3) présente une pluralité de dents de stator (6) reliées par un rétrocouplage magnétique (31) qui sont réalisées chacune en forme de L et l'un des flancs de la dent de stator (6) s'étend parallèlement à l'axe de rotation théorique (Ω) du rotor (5) et l'autre flanc de la dent de stator (6) s'étend radialement en direction de l'axe de rotation théorique (Ω) et dans lequel l'enroulement de stator (4) de l'entraînement rotatif électrique (2) est disposé sur le flanc le plus long de la dent de stator (6).

6. Dispositif selon l'une des revendications 1 à 5, avec un rotor magnétique permanent (5).

7. Dispositif selon l'une des revendications 1 à 6, dans lequel l'élément rotatif (5) est entouré en totalité ou en partie par un boîtier de rotor (7).

8. Dispositif selon l'une des revendications 1 à 7, dans lequel l'élément rotatif (5) présente des auxiliaires de circulation (8) pour améliorer la circulation du fluide (1).

9. Dispositif selon l'une des revendications 1 à 8, dans lequel le stator (3) présente des moyens d'isolation (9) pour l'isolation thermique.

10. Dispositif selon l'une des revendications 1 à 9, dans lequel le boîtier de rotor (7) comprend des dispositifs (10) pour l'isolation thermique.

11. Dispositif selon l'une des revendications 1 à 10, qui présente un capteur de température (11) pour déterminer la température (T) du fluide (1).

12. Dispositif selon l'une des revendications 1 à 11, dans lequel l'élément rotatif (5) est réalisé et disposé de façon à ne générer pratiquement aucune puissance de pompage hydraulique.

13. Dispositif selon l'une des revendications 1 à 12, qui est réalisé sous la forme d'une pompe rotative avec une arrivée (12) et une sortie (13) pour le fluide (1).

14. Procédé de détermination de la viscosité (η) d'un fluide (1) au moyen d'un dispositif selon la revendication 1, dans lequel l'entraînement rotatif (2) fonctionne dans une plage de travail (A) dans laquelle la part de la perte visqueuse convertie par la rotation de l'élément rotatif (5) dans le fluide (1) est au moins égale à 80% de la puissance totale de l'entraînement rotatif électrique (2), en particulier au moins égale à 95%, et la viscosité (η) est déterminée à partir d'un courant générateur de couple (I_{q}).

15. Procédé de détermination de la viscosité (η) d'un fluide (1) selon la revendication 14, dans lequel la viscosité (η) est déterminée par la mesure de données de fonctionnement électrique et/ou de données de fonctionnement mécanique de l'entraînement rotatif électrique (2).

16. Procédé selon la revendication 14 ou 15, dans lequel le procédé est exploité en ligne.

17. Procédé selon l'une des revendications 14 à 16, dans lequel l'élément rotatif (5) génère une puissance de pompage hydraulique.

18. Procédé selon l'une des revendications 14 à 17, dans lequel, pour déterminer la viscosité (η) du fluide (1), on fait varier le courant générateur de couple (I_{q}) dans l'enroulement de stator (4) de l'entraînement rotatif (2) suivant un schéma prédéfinissable.

19. Procédé selon l'une des revendications 14 à 18, dans lequel, pour déterminer la viscosité (η) du fluide (1), on fait varier la vitesse de rotation (ω) de l'entraînement rotatif (2) suivant un schéma prédéfinissable.

20. Procédé selon l'une des revendications 14 à 19, dans lequel la température (T) du fluide (1) est régulée ou commandée en faisant varier un courant de chauffage imposé par l'enroulement de stator (4).

21. Procédé selon l'une des revendications 14 à 20, ledit procédé comprenant un premier mode de fonctionnement et au moins un autre mode de fonctionnement, dans lequel, dans le premier mode de fonctionnement, on détermine au moins un paramètre physique du fluide (1), de préférence sa viscosité (η), et, dans l'autre mode de fonctionnement, on détermine une autre grandeur physique du fluide (1), de préférence sa densité.

22. Procédé selon l'une des revendications 14 à 21, dans lequel on détermine au moins un paramètre physique du fluide (1) en fonction du lieu (X) et/ou du temps (t).
